# EUROPEAN PATENT SPECIFICATION

(11) **EP 1 894 356 B1**
(45) Date of publication and mention of the grant of the patent: **27.03.2013**
(21) Application number: 06773216.4
(22) Date of filing: 14.06.2006
(51) Int. Cl.: H04L 12/28

(54) **Element designations for network optimization**
Elementkennzeichnungen zur Netzoptimierung
Designations d'élément pour optimisation de réseau

(30) Priority: 23.06.2005 US 165751
(43) Date of publication of application: 05.03.2008
(73) Proprietor: Cisco Technology, Inc., San Jose, CA 95134 (US)
(72) Inventor: STIEGLITZ, Jeremy, Menlo Park, CA 94025-3306 (US); ACHARYA, Shripati, Fremont, CA 94539 (US); SEIDE, Ronald Stephen, Solon, OH 44139 (US)
(74) Representative: Mathys & Squire LLP
(86) International application number: PCT/US2006/023258
(87) International publication number: WO 2007/001872

(56) References cited:
- WO-A-01/15478
- WO-A2-98/47305

## Description

### BACKGROUND OF THE INVENTION

This invention is related in general to processing of digital information and more specifically to systems and methods for selectively affecting data storage in a network.

Systems for selectively storing and processing network data are employed in various demanding applications including connection-management applications for wireless and wired networks and inventory-management applications. Such applications often demand fast, secure, and high-performance data storage and processing.

Efficient data storage and processing are particularly important in Wireless Local Area Network (WLAN) applications, where data privacy, network access control, client-roaming management, and other data storage and processing tasks are routinely performed. WLANs must often ensure data privacy, provide extensive network access control, enable fast and secure client-roaming between access points, geographically locate and process wireless connections, maximize radio performance and coverage, manage and optimize radio power usage, and enable wireless voice and data communications, including delivery of business applications via the WLAN. Related tasks include maintaining and processing client-state information, security associations, key-management information, radio performance parameters, and other client records and data.

WLANS often provide connectivity and mobility to wireless mobile clients, such as pocket computers. A WLAN may include various wireless clients or other network elements that communicate with an edge access point, which communicates with a wireless switch or controller. The controller and switch often include functionality to manage wireless connections. Managing and scaling wireless connections may demand significant computing and data-storage resources. Unfortunately, existing systems and methods for storing and handling data in a network, such as a WLAN, exhibit many inefficiencies.

WO01/15478 discloses a method for management of a database of a visitor location register (VLR) in a mobile telecommunications network.

Aspects of the invention are set out in the independent claims. Certain preferred features are set out in the dependent claims.

### BRIEF DESCRIPTION OF THE DRAWINGS

Fig. 1 is a diagram of a system for employing client designations to improve network data handling and processing according to an embodiment of the present invention.
Fig. 2 is a flow diagram of a first method adapted for use with the system of Fig. 1.
Fig. 3 is a flow diagram of a second method adapted for use with the system of Fig. 1.

### DETAILED DESCRIPTION OF EMBODIMENTS OF THE INVENTION

A preferred embodiment of the present invention implements a system for improving network resource utilization. In a preferred embodiment, the system includes a first module adapted to determine whether a client will require roaming services or not. A second module, which communicates with the first module, maintains records of the client that are required only for roaming services only if the client will require roaming services as determined by the first module. In general, any type of hardware or software or combination thereof can be used with aspects of the invention. Any type of network or communication link can be used. Furthermore, any type of data, such as Intrusion Detection System (IDS) alerts, may be used with aspects of the invention.

For clarity, various well-known components, such as power supplies, communications ports, routers, gateways, firewalls, and so on, have been omitted from the figures. However, those skilled in the art with access to the present teachings will know which components to implement and how to implement them to meet the needs of a given application.

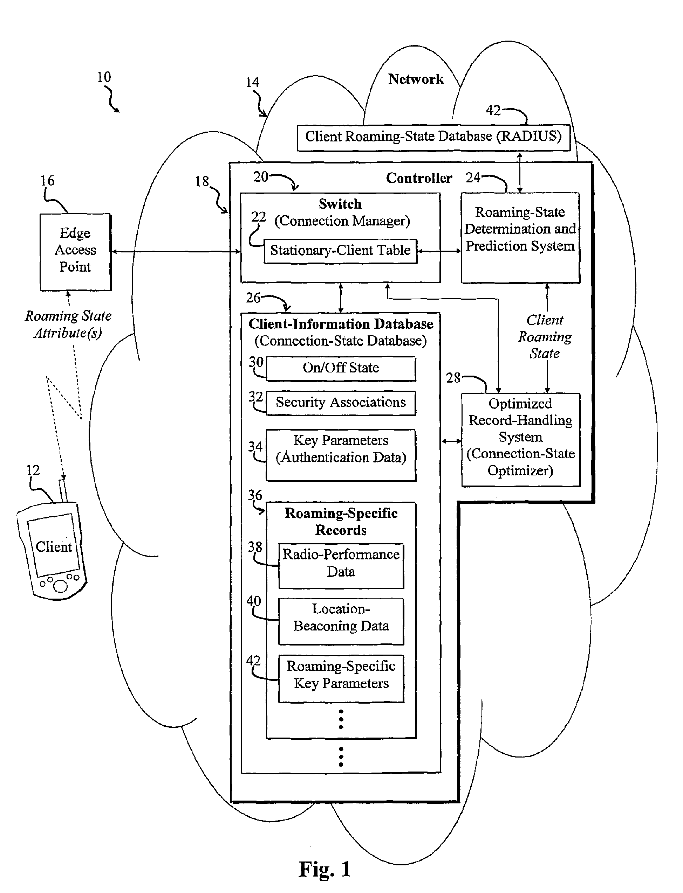

Fig. 1 is a diagram of a system 10 for employing client designations to improve network data handling and processing efficiency according to an embodiment of the present invention. The system 10 includes one or more wireless clients 12 in communication with a network 14 via an edge access point 16. In the present specific embodiment, the network 14 is a Wireless Local Area Network (WLAN) and includes a controller 18 with a co-located wireless-network switch 20. The controller 18 communicates with a third-party client roaming-state database 42, which may be implemented via a RADIUS (Research And Development In the United States) database.

The controller 18 further includes the switch 20, which includes a stationary-client table 22. The switch 20 communicates with a roaming-state determination and prediction system 24, a client-information database 26, and an optimized record-handling system 28. The optimized record-handling system 28 also communicates with the client-information database 26 and the roaming-state determination and prediction system 24. The switch 20 also communicates with the edge access point 16, which is outside of the controller 18 in the present embodiment.

The client-information database 26 maintains and selectively processes various types of client-information records, including on/off connection state 30, security associations 32, key parameters 34, and roaming-specific records 36. For illustrative purposes, the roaming-specific records 36 are shown including roaming-specific radio-performance data 38, roaming-specific location-beaconing data 40, and roaming-specific key parameters 42.

For the purposes of the present discussion, an element may be any device, node, or other entity, such as a network client, that functions in support of or as part of a network. A network may be any collection of interconnected elements. Network elements may be connected in various ways, including wirelessly, acoustically, electronically, and/or photonically.

In operation, one or more wireless clients, represented by the client 12, establish connections with the network 14 via a radio connection to the edge access point 16. The switch 20 may facilitate routing the connection and/or establishing communications between the client 12 and another network element, such as another client. Each communication session initiated by the client 12 exhibits particular attributes or session states that must be maintained and updated, such as by the controller 18, to efficiently manage the communication session. For example, certain client state data and information indicating what network services the client 12 is authorized to receive, such as roaming services, will affect the nature of the communication session. The client 12, may be a relatively stationary device, such as a cash resister, or a roaming device, such as a web-enabled pocket PC (pocket Personal Computer) or wireless-phone computer.

Conventionally, both roaming-specific records 36 and records required for stationary connections only, such as on/off-connection state 30, security associations 32, and key parameters 34, were maintained and updated in a database regardless of whether or not the state information was required for a given communication session or client. This caused a previously unrecognized or unsolved problem, which is addressed via certain embodiments of the present invention. The problem involves unnecessarily maintaining client-roaming information for stationary clients, which may significantly burden network resources, including data storage and processing resources. Conventionally, many wireless networks create and maintain such records whether or not they are needed.

In the present operative scenario, the client 12 initially sends a request for a connection to the switch 20 via the edge access point 16. The switch 20 may access and selectively update the client-information database 26 to facilitate establishing the requested connection in a process called client association. For example, the switch may employ the key parameters 34 stored in the client-information database 26 to authenticate the client 12 to enable particular types of services.

The roaming-state determination and prediction system 24 determines when a client connection is being established with the switch 20 via the client 12 and edge access point 16. Upon client association, the roaming-state determination and prediction system 24 determines whether the client will require roaming services, also called roaming facilities, and provides a corresponding roaming-state signal to the optimized record-handling system 28, which acts as a connection-state optimizer.

The optimized record-handling system 28 then automatically configures the client-information database 26 and the switch 20 accordingly. If the client 12 will require roaming facilities, then the roaming-specific records 36 are maintained by the client-information database 26 and selectively updated by the switch 20. Otherwise, if the client 12 is substantially stationary, then the roaming-specific records 36 are not maintained and updated. Those skilled in the art with access to the present teachings may readily build the various modules of the controller 18 without undue experimentation.

To determine and/or predict the roaming state of the client 12, the roaming-state determination and prediction system 24 may access the client roaming-state database 42, using an identification number associated with the client 12 to access the appropriate records within the client roaming-state database 42. The client roaming-state database 42 may be maintained by a third party and may include listings or records indicating devices that require stationary services only and devices that require both roaming and stationary services.

The roaming-state determination and prediction system 24 may also interrogate the client 12 by sending a roaming-state query to the client 12. The client 12 may respond to the roaming-state query with one or more predetermined roaming attributes that indicate whether or not the client 12 will require roaming services. Alternatively, the client 12 and controller 18 are configured so that the client 12 automatically forwards roaming attributes to the controller 18 upon initial client association.

The roaming-state determination and prediction system 24 may also access the stationary-client table 22 maintained by the switch 20. The stationary-client table 22 lists all clients known to be stationary and lists their corresponding locations as needed. Accordingly, the optimized record-handling system 28 will ensure that records required for roaming services only will not be maintained and processed by the client-information database 26 for such clients.

The stationary-client table 22, the client roaming-state database 42, and the roaming attributes maintained by the client 12 may be omitted without departing from the scope of the present invention. Other modules and/or methods for determining whether a client will require roaming services may be employed to implement embodiments of the present invention without departing from the scope thereof.

Hence, the embodiment 10 initially classifies or designates the client 12 as roaming or stationary. Client roaming behavior for use in classifying the client 12 could be quantified and obtained via a pre-configured attribute communicated by the client 12, the pre-configured static table 22 of stationary devices, or from the third party database system 42. The connection status for the associated wireless connection is then optimized via the optimized record-handling system 28.

The optimized record-handling system 28 facilitates establishing roaming wireless facilities, such as location beaconing, roaming key management and key hierarchies, settings for 802.11i pre-authentication, and radio performance monitoring, by enabling the client-information database 26 and switch 20 to store and process such information. Not maintaining roaming-specific information 36 for clients identified as stationary reduces the overhead on the wireless LAN switch/controller 14 by obviating the need to create any such per-client state records 38-42.

The optimized record-handling system 28 may further facilitate additional network optimizations, such as selecting optimal networking data rates, frequency hoping characteristics, and tailoring parameters for mesh and high density networks, such as enhanced neighbor lists and directed roaming settings.

In an illustrative implementation, the roaming-state determination and prediction system 24 may establish client designations other than roaming or stationary-client designations. For example, the roaming-state determination and prediction system 24 may provide various roaming designations, e.g. tiered roaming levels. For example, clients remaining in a particular region, such as a floor of a building, might be classified, i.e., designated as floor-level roaming clients, while clients confined to a larger region, such as a campus, might be designated as campus-level roaming clients. Data associated with such clients is also classified and/or prioritized accordingly. Such different client designations may determine which types of client information should be maintained and which should not be maintained for a particular client for a particular communication session. This may improve the efficiency with which the network 14 handles associated communication sessions by limiting data storage and processing to that required for a particular application.

For example, a client designed as a floor-level roaming may only require Ethernet Layer 2 roaming facilities and local-access-point support. A client designated as a campus-roaming client may require additional services, such as more complex Internet Protocol (IP) Layer 3 mobility services. Embodiments of the present invention may prevent unnecessarily maintaining and processing data that is not required for the given application.

Additional client designations other than roaming designations may be employed without departing from the scope of the present invention. For example, in an alternative operative scenario, the roaming-state determination and prediction system 24 further designates or classifies clients based on whether the clients will require voice facilities and/or data facilities and may further classify clients based on current location. The optimized record-handling system 28 may employ the additional designations to further optimize data storage and handling performed by the client-information database 26. Note that roaming requirements for truly mobile clients, such as voice handsets, often differ from more nomadic clients such as data.

The system 10 may improve network-resource allocation in various ways including by quickly identifying stationary clients and their a priori known location; enabling each access point 16 and/or controller 18 to dynamically determine when system thresholds are reached for load-balancing; dynamically adjusting numbers of fixed and/or stationary clients as the numbers change; and improving aggregate system performance by eliminating protocol overhead that is unnecessary to a particular type of client device.

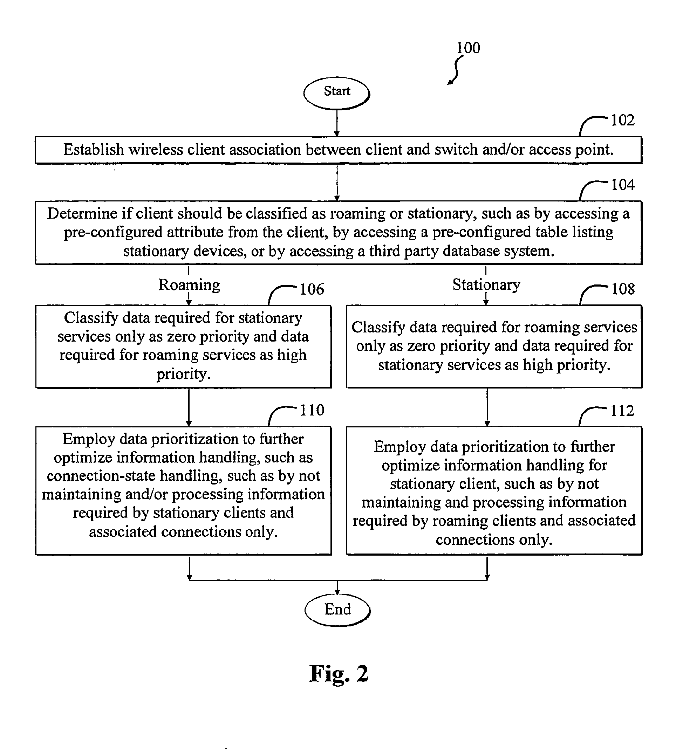

Fig. 2 is a flow diagram of a first method 100 adapted for use with the system 10 of Fig. 1. With reference to Figs. 1 and 2, the method 100 includes an initial association step 102, wherein the client 12 establishes initial communications with the edge access point 16 and/or the controller 18 and accompanying switch 18. In the present embodiment, client association involves the controller 18 associating the client 12 with records in the client-information database 26 upon beginning a communication session with the client 12.

In a subsequent client-classification step 104, the roaming-state determination and prediction system 24 determines if the client 12 will require roaming services by accessing the client roaming-state database 42, the stationary-client table 22, and/or the system 24 receives client-state information from the client 12 as needed. If the client 12 requires roaming services, then client data required for roaming services is assigned a relatively high priority by the optimized record-handling system 28 in a first data-classification step 106. Data required for stationary services only is assigned a low priority, such as zero.

In a subsequent roaming-optimization step 110, the client-information database 26 is configured to maintain and update client data that is assigned a relatively high priority by the optimized record-handling system 28. Similarly, data assigned a low or zero priority is discarded and or ignored by the client-information database 26. The switch 20 then employs the client-information database 26 to facilitate establishing and maintaining a client connection with roaming facilities, such as location beaconing, roaming key management and key hierarchies, settings for 802.11i pre-authentication, radio performance monitoring, and so on. The optimized record-handling system 28 employs the data-prioritization levels to further optimize information handling, such as by improving connection-state handling by freeing network resources that would otherwise be employed to maintain and process data required for stationary services only.

If in the client-classification step 104, the roaming-state determination and prediction system 24 determines that the client 12 will require stationary services only, then any associated roaming-specific information is assigned a low or zero priority by the optimized record-handling system 28. In this case, data required for stationary services is assigned a relatively high priority by the optimized record-handling system 28. Consequently, in a subsequent stationary-optimization step 112, data required for roaming services only is ignored or discarded. After steps 110 and 112 complete, the method 100 completes. The switch 20 then employs the client-information database 26 to facilitate establishing and maintaining a connection with stationary attributes and/or services without maintaining or processing client-state records required for roaming only.

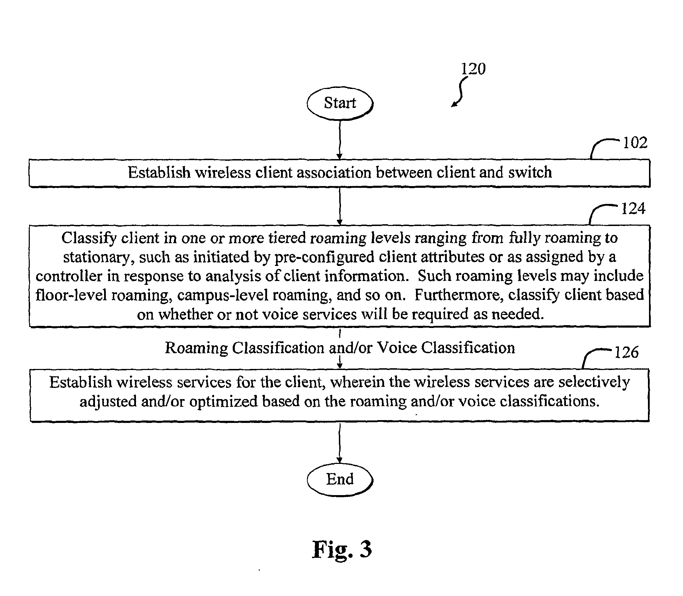

Fig. 3 is a flow diagram of a second method 120 adapted for use with the system 10 of Fig. 1. With reference to Figs. 1-3, the second method 120 includes the initial association step 102, wherein the edge access point 16 and/or the controller 18 establish initial client association or contact.

In a subsequent classification-step 24, the client 12 and associated data communications are classified according to one or more particular types of roaming services that the client 12 will require. In this implementation, the system 10 of Fig. 1 accommodates various roaming levels ranging from full-featured roaming to stationary. The roaming-state determination and prediction system 24 may perform the client-roaming classification based on pre-configured client attributes stored in one or more locations, such as in the client device 12, the roaming-state database 42, and so on. The various roaming levels may include floor-level roaming, campus-level roaming, and so on. The client 12 and associated data communicated from the client 12 to the network 14 may be further classified according to voice services that will be required by the client 12 during communication sessions.

Subsequently, the controller 18 facilitates establishing and maintaining wireless communications between the network 14 and the client 12, wherein the wireless services associated with the communications are selectively adjusted and/or optimized based on the roaming and/or voice classifications established in the previous classification step 124. Those skilled in the art will appreciate that the controller 18 may be implemented within the edge access point 16 without departing from the scope of the present invention.

While the present embodiment is discussed with reference to wireless client designations in WLANs, embodiments of the present invention are not limited thereto. For example, many types of networks, either wired or wireless may benefit from data storage and processing efficiencies afforded by embodiments of the present invention. Employing novel methods that may include adjusting which types of data are stored and processed based on client behavior, such as roaming behavior, and/or other client characteristics may yield improvements in network resource management for virtually any network.

Variations and embodiments other than those discussed herein are possible. For example, embodiments employing the Internet or other packet switched networks, embodiments employing video calls, file transfers, conference calls, and so on are possible.

Although embodiments of the invention are discussed primarily with respect to server-client architecture, any acceptable architecture, topology, protocols, or other network and digital processing features can be employed. In general, network controllers, managers, access points, clients, and so on, can be implemented via any device with processing ability or other requisite functionality. It is also possible that functionality relevant to embodiments of the present invention can be included in a router, switch or device other than the controller 18 of Fig. 1.

Although processes of the present invention, and the hardware executing the processes, may be characterized by language common to a discussion of the Internet (e.g., "client," "server," "peer"), it should be apparent that operations of the present invention can execute on any type of suitable hardware in any communication relationship to another device on any type of link or network.

Although a process of the present invention may be presented as a single entity, such as software executing on a single machine, such software can readily be executed on multiple machines. That is, there may be multiple instances of a given software program, a single program may be executing on two or more processors in a distributed processing environment, parts of a single program may be executing on different physical machines, etc. Furthermore, two different programs, such as a client and server program, can be executing in a single machine, or in different machines. A single program can be operating as a client for one information transaction and as a server for a different information transaction.

Any type of processing device can be used as a client. For example, portable computing devices such as a personal digital assistant (PDA), cell phone, laptop computer, or other devices can be employed. In general, the devices and manner of specific processing (including location and timing) are not critical to practicing important features of the present invention.

Although the invention has been discussed with respect to specific embodiments thereof, these embodiments are merely illustrative, and not restrictive, of the invention. Embodiments of the present invention can operate between any two processes or entities including users, devices, functional systems or combinations of hardware and software. Peer-to-peer networks and any other networks or systems where the roles of client and server are switched, change dynamically, or are not even present are within the scope of the invention.

Any suitable programming language can be used to implement the routines or other instructions employed by various network entities. Exemplary programming languages include C, C++, Java, assembly language, etc. Different programming techniques can be employed such as procedural or object oriented. The routines can execute on a single processing device or multiple processors. Although the steps, operations or computations may be presented in a specific order, this order may be changed in different embodiments. In some embodiments, multiple steps shown as sequential in this specification can be performed at the same time. The sequence of operations described herein can be interrupted, suspended, or otherwise controlled by another process, such as an operating system, kernel, etc. The routines can operate in an operating system environment or as stand-alone routines occupying all, or a substantial part, of the system processing.

In the description herein, numerous specific details are provided, such as examples of components and/or methods, to provide a thorough understanding of embodiments of the present invention. One skilled in the relevant art will recognize, however, that an embodiment of the invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

A "machine-readable medium" or "computer-readable medium" for purposes of embodiments of the present invention may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory.

A "processor" or "process" includes any human, hardware and/or software system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real time," "offline," in a "batch mode," etc. Portions of processing can be performed at different times and at different locations, by different (or the same) processing systems. A computer may be any processor in communication with a memory.

Reference throughout this specification to "one embodiment", "an embodiment", or "a specific embodiment" means that a particular feature, structure, or characteristic described in connection with the embodiment is included in at least one embodiment of the present invention and not necessarily in all embodiments. Thus, respective appearances of the phrases "in one embodiment", "in an embodiment", or "in a specific embodiment" in various places throughout this specification are not necessarily referring to the same embodiment. Furthermore, the particular features, structures, or characteristics of any specific embodiment of the present invention may be combined in any suitable manner with one or more other embodiments. It is to be understood that other variations and modifications of the embodiments of the present invention described and illustrated herein are possible in light of the teachings herein and are to be considered as part of the spirit and scope of the present invention.

Embodiments of the invention may be implemented in whole or in part by using a programmed general purpose digital computer; by using application specific integrated circuits, programmable logic devices, field programmable gate arrays, optical, chemical, biological, quantum or nanoengineered systems or mechanisms; and so on. In general, the functions of the present invention can be achieved by any means as is known in the art. Distributed or networked systems, components, and/or circuits can be used. Communication, or transfer of data may be wired, wireless, or by any other means.

It will also be appreciated that one or more of the elements depicted in the drawings/figures can also be implemented in a more separated or integrated manner, or even removed or rendered as inoperable in certain cases, as is useful in accordance with a particular application. It is also within the spirit and scope of the present invention to implement a program or code that can be stored in a machine-readable medium to permit a computer to perform any of the methods described above.

Additionally, any signal arrows in the drawings/figures should be considered only as exemplary, and not limiting, unless otherwise specifically noted. Furthermore, the term "or" as used herein is generally intended to mean "and/or" unless otherwise indicated. Combinations of components or steps will also be considered as being noted, where terminology is foreseen as rendering the ability to separate or combine is unclear.

As used in the description herein and throughout the claims that follow "a", "an", and "the" include plural references unless the context clearly dictates otherwise. Furthermore, as used in the description herein and throughout the claims that follow, the meaning of "in" includes "in" and "on" unless the context clearly dictates otherwise.

## Claims

1. System for selectively handling client information pertaining to a client (12) connected to a wireless access point in a wireless local area network, WLAN (14), the system comprising:
means (24) for determining whether the client is a roaming client or a stationary client;
means (28) for determining a priority of the information and providing a signal in response thereto, wherein the priority is based on whether the at least one client is a roaming client or a stationary client, wherein the priority determining means is configured to assign a high priority for information required for roaming services and a low priority for information required only for stationary services if the client is a roaming client, and to assign a high priority for information required for stationary services and a low priority for information required only for roaming services if the client is a stationary client; and
data handling means (20) for continuing handling of the information or refraining from further handling the information based on the signal.

2. The system of claim 1, wherein the data handling means is configured to maintain and update the subset of information if the priority is high, and to discard the subset of information if the priority is low.

3. The system of claim 1 or 2, wherein the priority determining means is configured to determine priorities for first and second subsets of the client information, the first subset including information required for stationary services and the second subset including information required for roaming services.

4. The system of Claim 1 wherein the information includes client records required for roaming.

5. The system of Claim 1 wherein the data handling means includes a computer accommodating a database for handling the information.

6. The system of Claim 5 wherein handling the information includes storing the information to facilitate further retrieval, discarding the information, and/or selectively updating the information.

7. The system of Claim 6 wherein the computer implements a network controller.

8. The system of Claim 1, comprising means for determining one of a plurality of tiered roaming levels for the client.

9. The system of Claim 1 wherein the means for determining whether the client is a roaming client or a stationary client includes one or more routines running on a computer, the one or more routines being adapted to selectively access roaming-state information indicating whether the client will require roaming facilities or will not require the roaming facilities.

10. The system of Claim 1 wherein the means for determining whether the client is a roaming client or a stationary client is configured to determine whether the at least one client is a roaming client or a stationary client by selectively accessing client information from one or more of: a roaming-state database (42), a stationary-client table (22), and directly from the at least one client (12).

11. The system of Claim 4 wherein the data handling means is adapted to continue handling the information when the one or more clients will require roaming and adapted to refrain from further handling the information when the one or more clients will not require roaming.

12. A method for selectively handling client information pertaining to a client (12) connected to a wireless access point (16) in a wireless local area network, WLAN (14), comprising:
determining a mobility status of a client before or upon establishing a communications link between the client and another entity, the mobility status of the client specifying whether the client is a roaming client or a stationary client;
determining a priority of the client information based on the determined mobility status and providing a signal in response thereto, wherein the determining comprises assigning a high priority for information required for roaming services and a low priority for information required only for stationary services if the client is a roaming client, and assigning a high priority for information required for stationary services and a low priority for information required only for roaming services if the client is a stationary client; and
determining whether to continue handling the information or to refrain from further handling the information based on the signal.

13. The method of Claim 12 wherein the mobility status further specifies a particular mobility level associated with the client, wherein the particular mobility level is chosen from among plural roaming levels.

14. The method of Claim 12 comprising determining whether the client will require voice services and adjusting network resource usage by the associated client communications link in response thereto.

15. The method of claim 12, comprising maintaining records of the client that are required only for roaming services only if the client will require roaming services.

16. The method of Claim 12 wherein maintaining records of the client includes maintaining records that are required only for stationary services only if the client will require stationary services.

17. The method of Claim 12 comprising employing a computer to facilitate establishing a wireless connection with the client.

18. The method of Claim 12 comprising, upon establishing the connection, determining whether the client is currently roaming or stationary.

19. The method of Claim 18 wherein whether the client is roaming or stationary is detailed via a pre-configured attribute communicated by the client to the computer.

20. The method of Claim 18 wherein whether the client is roaming or stationary is maintained by a database system.

21. The method of Claim 20 wherein the database system includes a RADIUS system.

22. The method of Claim 18 comprising establishing the roaming services when the client is identified as roaming.

23. The method of Claim 22 wherein the roaming services include location beaconing, roaming by key management, roaming by key hierarchies, maintaining settings for 802.11 pre-authentication services, and/or radio performance monitoring.

24. The method of Claim 18 comprising refraining from providing the roaming services to the client when the client is identified as stationary.

25. A computer program or computer program product comprising software code adapted, when executed on a data processing apparatus, to perform a method as claimed in any of claims 12 to 24.

## Patentansprüche

1. System zum selektiven Behandeln von Client-Informationen, die zu einem Client (12) gehören, der mit einem drahtlosen Zugangspunkt in einem drahtlosen lokalen Netzwerk (Wireless Local Area Network, WLAN) (14) verbunden ist, wobei das System aufweist:
eine Einrichtung (24) zum Ermitteln, ob der Client ein Roaming Client oder ein stationärer Client ist;
eine Einrichtung (28) zum Bestimmen der Priorität der Informationen und zum Liefern eines Signals im Ansprechen darauf, wobei die Priorität darauf basiert, ob der wenigstens eine Client ein Roaming Client oder ein stationärer Client ist, wobei die Einrichtung zum Bestimmen der Priorität so konfiguriert ist, das sie für Informationen, die für Roaming Dienste erforderlich sind, eine hohe Priorität zuteilt, und für Informationen, die nur für stationäre Dienste erforderlich sind, eine niedrige Priorität zuteilt, wenn der Client ein Roaming Client ist, und für Informationen, die für stationäre Dienste erforderlich sind, eine hohe Priorität zuteilt, und für Informationen, die nur für Roaming Dienste erforderlich sind, eine niedrige Priorität zuteilt, wenn der Client ein stationärer Client ist; und
eine Datenbehandlungseinrichtung (20) zum Fortsetzen der Behandlung der Informationen oder zum Unterlassen der weiteren Behandlung der Informationen, basierend auf dem Signal.

2. System nach Anspruch 1, wobei die Datenbehandlungseinrichtung so konfiguriert ist, dass sie die Teilmenge von Informationen speichert und aktualisiert, wenn die Priorität hoch ist, und die Teilmenge von Informationen verwirft, wenn die Priorität niedrig ist.

3. System nach Anspruch 1 oder 2, wobei die Einrichtung zum Bestimmen der Priorität so konfiguriert ist, dass sie Prioritäten für erste und zweite Teilmengen der Client-Informationen bestimmt, wobei die erste Teilmenge Informationen enthält, die für stationäre Dienste erforderlich sind, und die zweite Teilmenge Informationen enthält, die für Roaming Dienste erforderlich sind.

4. System nach Anspruch 1, wobei die Informationen Client-Aufzeichnungen enthalten, die für Roaming erforderlich sind.

5. System nach Anspruch 1, wobei die Datenbehandlungseinrichtung einen Computer aufweist, der eine Datenbank zum Behandeln der Informationen enthält.

6. System nach Anspruch 5, wobei das Behandeln der Informationen das Speichern der Informationen umfasst, um das weitere Abrufen zu erleichtern, das Verwerfen der Informationen und/oder das selektive Aktualisieren der Informationen.

7. System nach Anspruch 6, wobei der Computer einen Netzwerk-Controller implementiert.

8. System nach Anspruch 1, das eine Einrichtung zum Bestimmen einer einer Vielzahl von abgestuften Roaming-Ebenen für den Client aufweist.

9. System nach Anspruch 1, wobei die Einrichtung zum Ermitteln, ob der Client ein Roaming Client oder ein stationärer Client ist, eine oder mehrere Routinen aufweist, die auf einem Computer laufen, wobei die eine oder die mehreren Routinen ausgelegt sind zum selektiven Zugreifen auf Roaming-Zustands-Informationen, die angeben, ob der Client Roaming-Einrichtungen benötigt oder keine Roaming-Einrichtungen benötigt.

10. System nach Anspruch 1, wobei die Einrichtung zum Ermitteln, ob der Client ein Roaming Client oder ein stationärer Client ist, so konfiguriert ist, dass sie ermittelt, ob der wenigstens eine Client ein Roaming Client oder ein stationärer Client ist, indem sie selektiv auf Client-Informationen zugreift aus einem oder mehreren von: einer Roaming-Zustands-Datenbank (42), einer Stationär-Client-Tabelle (22) und direkt von dem wenigstens einen Client (12).

11. System nach Anspruch 4, wobei die Datenbehandlungseinrichtung ausgelegt ist zum Fortsetzen der Behandlung der Informationen, wenn der eine oder die mehreren Clients Roaming benötigen, und ausgelegt ist zum Unterlassen der weiteren Behandlung der Informationen, wenn der eine oder die mehreren Clients kein Roaming benötigen.

12. Verfahren zum selektiven Behandeln von Client-Informationen, die zu einem Client (12) gehören, der mit einem drahtlosen Zugangspunkt (16) in einem drahtlosen lokalen Netzwerk (Wireless Local Area Network, WLAN) (14) verbunden ist, wobei das Verfahren umfasst:
Ermitteln eines Mobilitätsstatus eines Clients, vor dem oder beim Herstellen einer Kommunikationsverbindung zwischen dem Client und einer anderen Einheit, wobei der Mobilitätsstatus des Clients angibt, ob der Client ein Roaming Client oder ein stationärer Client ist;
Bestimmen der Priorität der Client-Informationen basierend auf dem ermittelten Mobilitätsstatus und Liefern eines Signals im Ansprechen darauf, wobei das Bestimmen das Zuteilen einer hohen Priorität für Informationen, die für Roaming Dienste erforderlich sind, und einer niedrigen Priorität für Informationen, die nur für stationäre Dienste erforderlich sind, umfasst, wenn der Client ein Roaming Client ist, und das Zuteilen einer hohen Priorität für Informationen, die für stationäre Dienste erforderlich sind, und einer niedrigen Priorität für Informationen, die nur für Roaming Dienste erforderlich sind, wenn der Client ein stationärer Client ist; und
Bestimmen, ob die Behandlung der Informationen fortgesetzt wird oder die weitere Behandlung der Informationen unterlassen wird, basierend auf dem Signal.

13. Verfahren nach Anspruch 12, wobei der Mobilitätsstatus des Weiteren eine bestimmte Mobilitätsstufe spezifiziert, die mit dem Client assoziiert ist, wobei die bestimmte Mobilitätsstufe aus mehreren Roaming-Stufen gewählt wird.

14. Verfahren nach Anspruch 12, das das Ermitteln umfasst, ob der Client Sprachdienste benötigt, und das Anpassen der Netzwerkressourcenverwendung durch die assoziierte Client-Kommunikationsverbindung im Ansprechen darauf.

15. Verfahren nach Anspruch 12, das das Speichern von Aufzeichnungen des Clients umfasst, die nur für Roaming Dienste benötigt werden, nur wenn der Client Roaming Dienste benötigt.

16. Verfahren nach Anspruch 12, wobei das Speichern von Aufzeichnungen des Clients das Speichern von Aufzeichnungen umfasst, die nur für stationäre Dienste benötigt werden, nur wenn der Client stationäre Dienste benötigt.

17. Verfahren nach Anspruch 12, das das Verwenden eines Computers umfasst, um das Herstellen einer Drahtlosverbindung mit dem Client zu erleichtern.

18. Verfahren nach Anspruch 12, das, nach dem Herstellen der Verbindung, das Ermitteln umfasst, ob der Client aktuell roamt oder stationär ist.

19. Verfahren nach Anspruch 18, wobei über ein vorkonfiguriertes Attribut, das vom Client an den Computer kommuniziert wird, angegeben wird, ob der Client roamt oder stationär ist.

20. Verfahren nach Anspruch 18, wobei von einem Datenbanksystem gespeichert wird, ob der Client roamt oder stationär ist.

21. Verfahren nach Anspruch 20, wobei das Datenbanksystem ein RADIUS System aufweist.

22. Verfahren nach Anspruch 18, das das Einrichten der Roaming Dienste umfasst, wenn der Client als Roaming Client identifiziert ist.

23. Verfahren nach Anspruch 22, wobei die Roaming Dienste Standortsignalisierung, Roaming durch Schlüsselmanagement, Roaming durch Schlüsselhierarchien, Speichern von Einstellungen für 802.11 Vorauthentifizierungsdienste und/oder Funkleistungsüberwachung aufweisen.

24. Verfahren nach Anspruch 18, das das Unterlassen des Lieferns der Roaming Dienste an den Client umfasst, wenn der Client als stationär identifiziert ist.

25. Computerprogramm oder Computerprogrammerzeugnis mit Softwarecode, der zum Durchführen eines Verfahrens nach einem der Ansprüche 12 bis 24 ausgelegt ist, wenn er auf einer Datenverarbeitungsvorrichtung ausgeführt wird.

## Revendications

1. Système de manipulation sélective d'informations client relatives à un client (12) connecté à un point d'accès sans fil dans un réseau local sans fil, WLAN (14), le système comprenant :
un moyen (24) pour déterminer si le client est un client itinérant ou un client stationnaire ;
un moyen (28) pour déterminer une priorité des informations et fournir un signal en réponse à celle-ci, dans lequel la priorité dépend du fait que l'au moins un client soit un client itinérant ou un client stationnaire, dans lequel le moyen de détermination de priorité est configuré pour attribuer une priorité élevée pour des informations requises pour des services itinérants et une priorité faible pour des informations requises seulement pour des services stationnaires si le client est un client itinérant, et pour attribuer une priorité élevée pour des informations requises pour des services stationnaires et une priorité faible pour des informations requises seulement pour des services itinérants si le client est un client stationnaire ; et
un moyen de manipulation de données (20) pour poursuivre la manipulation des informations ou s'abstenir de manipuler davantage les informations sur la base du signal.

2. Système selon la revendication 1, dans lequel le moyen de manipulation de données est configuré pour maintenir et mettre à jour le sous-ensemble d'informations si la priorité est élevée, et pour rejeter le sous-ensemble d'informations si la priorité est faible.

3. Système selon la revendication 1 ou 2, dans lequel le moyen de détermination de priorité est configuré pour déterminer des priorités pour les premier et second sous-ensembles des informations client, le premier sous-ensemble incluant des informations requises pour des services stationnaires et le second sous-ensemble incluant des informations requises pour des services itinérants.

4. Système selon la revendication 1, dans lequel les informations incluent des enregistrements de client requis pour l'itinérance.

5. Système selon la revendication 1, dans lequel le moyen de manipulation de données inclut un ordinateur hébergeant une base de données pour manipuler les informations.

6. Système selon la revendication 5, dans lequel la manipulation des informations inclut le stockage des informations pour faciliter une récupération ultérieure, le rejet des informations et/ou la mise à jour sélective des informations.

7. Système selon la revendication 6, dans lequel l'ordinateur implémente un contrôleur de réseau.

8. Système selon la revendication 1, comprenant un moyen pour déterminer l'une d'une pluralité de niveaux d'itinérance différents pour le client.

9. Système selon la revendication 1, dans lequel le moyen pour déterminer si le client est un client itinérant ou un client stationnaire inclut une ou plusieurs routines s'exécutant sur un ordinateur, les une ou plusieurs routines étant adaptées pour accéder de façon sélective aux informations d'état d'itinérance indiquant si le client va requérir des installations itinérantes ou ne va pas requérir les installations itinérantes.

10. Système selon la revendication 1, dans lequel le moyen pour déterminer si le client est un client itinérant ou un client stationnaire est configuré pour déterminer si l'au moins un client est un client itinérant ou un client stationnaire en accédant de façon sélective aux informations client depuis un ou plusieurs parmi : une base de données d'état d'itinérance (42), un tableau client stationnaire (22), et directement depuis l'au moins un client (12).

11. Système selon la revendication 4, dans lequel le moyen de manipulation de données est adapté pour poursuivre la manipulation des informations lorsque les un ou plusieurs clients vont requérir une itinérance et adapté pour s'abstenir de manipuler davantage les informations lorsque les un ou plusieurs clients ne vont pas requérir d'itinérance.

12. Procédé de manipulation sélective d'informations client relatives à un client (12) connecté à un point d'accès sans fil (16) dans un réseau local sans fil, WLAN (14), comprenant :
le fait de déterminer un statut de mobilité d'un client avant ou lors de l'établissement d'une liaison de communication entre le client et une autre entité, le statut de mobilité du client précisant si le client est un client itinérant ou un client stationnaire ;
le fait de déterminer une priorité des informations client sur la base du statut de mobilité déterminé et la fourniture d'un signal en réponse à celle-ci, dans lequel la détermination comprend l'attribution d'une priorité élevée pour des informations requises pour des services itinérants et d'une priorité faible pour des informations requises seulement pour des services stationnaires si le client est un client itinérant, et l'attribution d'une priorité élevée pour des informations requises pour des services stationnaires et d'une priorité faible pour des informations requises seulement pour des services itinérants si le client est un client stationnaire ; et
le fait de déterminer s'il faut poursuivre la manipulation des informations ou s'abstenir de manipuler davantage les informations sur la base du signal.

13. Procédé selon la revendication 12, dans lequel le statut de mobilité précise en outre un niveau de mobilité particulier associé au client, dans lequel le niveau de mobilité particulier est choisi parmi plusieurs niveaux d'itinérance.

14. Procédé selon la revendication 12, comprenant le fait de déterminer si le client va requérir ou non des services vocaux et l'ajustement de l'utilisation de ressources réseau par le lien de communication de client associé en réponse à ceci.

15. Procédé selon la revendication 12, comprenant le maintien d'enregistrements du client qui sont requis seulement pour des services itinérants seulement si le client va requérir des services itinérants.

16. Procédé selon la revendication 12, dans lequel le maintien des enregistrements du client inclut le maintien d'enregistrements qui sont requis seulement pour des services stationnaires seulement si le client va requérir des services stationnaires.

17. Procédé selon la revendication 12, comprenant l'emploi d'un ordinateur pour faciliter l'établissement d'une connexion sans fil avec le client.

18. Procédé selon la revendication 12, comprenant, lors de l'établissement de la connexion, le fait de déterminer si le client est actuellement itinérant ou stationnaire.

19. Procédé selon la revendication 18, dans lequel le fait que le client soit itinérant ou stationnaire est détaillé via un attribut préconfiguré communiqué par le client à l'ordinateur.

20. Procédé selon la revendication 18, dans lequel le fait que le client soit itinérant ou stationnaire est maintenu par un système de base de données.

21. Procédé selon la revendication 20, dans lequel le système de base de données inclut un système RADIUS.

22. Procédé selon la revendication 18, comprenant l'établissement des services itinérants lorsque le client est identifié comme itinérant.

23. Procédé selon la revendication 22, dans lequel les services itinérants incluent le balisage d'emplacement, l'itinérance par gestion de clé, l'itinérance par hiérarchies de clé, le maintien de réglages pour des services de préauthentification 802.11 et/ou la surveillance de performance radio.

24. Procédé selon la revendication 18, comprenant le fait de s'abstenir de fournir les services itinérants au client lorsque le client est identifié comme stationnaire.

25. Programme informatique ou produit de programme informatique comprenant un code de logiciel adapté, lorsqu'il est exécuté sur un appareil de traitement de données, pour réaliser un procédé tel que revendiqué dans l'une quelconque des revendications 12 à 24.
